(19) Europäisches Patentamt
European Patent Office
Office européen des brevets

(11) **EP 3 748 298 B1**

(12) **EUROPEAN PATENT SPECIFICATION**

(45) Date of publication and mention
of the grant of the patent:
**08.06.2022  Bulletin 2022/23**

(51) International Patent Classification (IPC):
***G01C 21/20*** *(2006.01)*      ***G01C 21/00*** *(2006.01)*

(21) Application number: **20175469.4**

(52) Cooperative Patent Classification (CPC):
**G01C 21/20; G01C 21/3811; G01C 21/3841**

(22) Date of filing: **19.05.2020**

(54) **METHOD, APPARATUS, AND COMPUTER PROGRAM PRODUCT FOR IDENTIFYING BUILDING ACCESSORS**

VERFAHREN, VORRICHTUNG UND COMPUTERPROGRAMMPRODUKT ZUR IDENTIFIZIERUNG VON GEBÄUDEZUGÄNGEN

PROCÉDÉ, APPAREIL ET PRODUIT-PROGRAMME D'ORDINATEUR POUR IDENTIFIER DES ACCÈS DE BÂTIMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **22.05.2019  US 201916419128**

(43) Date of publication of application:
**09.12.2020  Bulletin 2020/50**

(73) Proprietor: **HERE Global B.V.**
**5611 ZT Eindhoven (NL)**

(72) Inventor: **Dorum, Ole Henry**
**Chicago, IL 60653 (US)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**EP-A1- 2 775 260     US-A1- 2018 087 922**

**Description**

TECHNOLOGICAL FIELD

Example embodiments described herein relate generally to identifying building accessors such as entrances, exits, doors, etc., and more particularly, to identifying the presence and location of building accessors on a representation of a building using crowd sourced location data.

BACKGROUND

Map generation and the identification of points of interest have been historically performed by cartographers that manually map and identify objects in a region. This manual, paper mapping has given way to digital mapping, which can be updated with greater frequency and with less effort that historically possible. Mapping regions can include the mapping of roadways, pathways, building locations, etc. To help facilitate map generation and updating, crowd sourced probe data may be used to illustrate where people travel, and use those paths to identify available paths on a map. The crowd sourced "probe" data may be used to identify available pathways and to map those pathways accordingly.

Generally, the location of a probe may be determined using a global navigation satellite system (GNSS), an example of which is the United States' global positioning system (GPS). Other examples of GNSS systems are GLONASS (Russia), Galileo (European Union) and Beidou/Compass (China), all systems having varying degrees of accuracy. Under good conditions, GPS provides a real-time location of a probe vehicle with a 95% confidence interval of 7.8 meters, according to the US government.

Given that the width of many lanes along a road segment is only 2.5 to 4 meters, pedestrian pathways being considerably smaller, and building accessors often being smaller still, this accuracy may not be sufficient to determine a lane of a road segment, a pedestrian pathway, or a building accessor by which a probed user may be entering or exiting a building. This limits the usefulness of the crowd sourced data as a map can only be generated or updated based on the reliability of data informing the map of the locations of mapped features.

US 2018/0087922 A1 discloses embodiments that provide a method for identifying one or more entrances to a point of interest or commercial entity (e.g., a shopping mall, a store, a business, etc.) using crowd sourced data received from a set of mobile devices over a specific period of time. The method identifies one or more points of entry to an enclosed area (e.g., a parking garage) associated with a point of interest (POI), as well as one or more points of entry to a building associated with the POI (e.g., a museum). When a user requests for directions to a particular POI, a navigation application of some embodiments uses these points of entry as the real driving and walking destinations when calculating and displaying a route to the particular POI.

EP 2 775 260 A1 discloses a system that receives mobile device data from a plurality of mobile devices. The system compares the mobile device data with cartographic data representing a structure and determines a structure access characteristic based on the comparison. The structure access characteristic may be the location of an entrance or exit to the structure. The structure access characteristic may also be a structure access type, a structure access status, a structure access schedule, or any other structure access characteristic.

BRIEF SUMMARY OF EXAMPLE EMBODIMENTS

At least some example embodiments are directed to determining building accessors based on probe information/data. In an example embodiment, a mapping system may be provided. The mapping system may include: a memory including map data and processing circuitry. The processing circuitry may be configured to receive probe data points, each probe data point received from a probe apparatus of a plurality of probe apparatuses, each probe apparatus including one or more sensors and being associated with a user, where each probe data point includes location information and heading information as trajectory information associated with the respective probe apparatus; match probe data to a map; for each of the probe data points, determine a location; determine probe data point candidates for a first edge of a building, where the probe data point candidates for the first edge of the building have a location within a buffer zone of the first edge of the building; determine, for the probe data point candidates, probe data points entering or exiting the building; generate, from the probe data points entering or exiting the building, a probe density histogram for the first edge of the building, where the probe density histogram represents a volume for the first edge of the building, where the probe density histogram represents a volume of probe data points at each of a plurality of positions across a width of the first edge of the building; apply a deconvolution method to the probe density histogram to obtain a multi-modal histogram; determine, from the multi-modal histogram, a number of statistically significant peaks, where each statistically significant peak represents an accessor to the building in the first edge of the building; and provide data for navigational assistance based on the computed accessors to the building.

According to some embodiments, the processing circuitry configured to determine, from the multi-modal histogram, a number of statistically significant peaks may include processing circuitry configured to determine, from the multi-modal histogram, a distance of each statistically significant peak from a reference point on the edge of the first building. The processing circuitry configured to determine, from the multi-modal histogram, a number of statistically significant peaks, each statistically significant peak representing an accessor to the building in the first edge of the building may include processing circuitry configured to: generate a perspective view of the first edge of the building; identify accessors in the first edge of the building in the perspective view; and provide for navigation assistance using the generated perspective view with identified accessors. The processing circuitry configured to generate a probe density histogram for the first edge of the building representing a volume of probe data points at each of a plurality of positions across a width of the first edge may include processing circuitry configured to: sub-divide a width of the first edge into a plurality of bins according to a chosen bin size; bin each probe data point of the probe data points entering and exiting the building to a respective one of the plurality of bins corresponding to a distance of the respective probe data point from a reference point on the first edge of the building; and generate the probe density histogram based on a volume of probe data points in each bin across the width of the first edge.

Embodiments of the mapping system may use a Maximum Entropy Method as the deconvolution method. The processing circuitry configured to apply a deconvolution to the probe density histogram to obtain a multi-modal histogram may include processing circuitry configured to: model location error of the probe data points within the buffer zone of the first edge of the building using a point spread function; apply the deconvolution method to the probe density histogram using the point spread function; and generate the multi-modal histogram for the first edge of the building. The processing circuitry configured to determine, for the probe data point candidates, probe data points entering or exiting the building may include processing circuitry configured to identify probe data points entering or exiting the building through the first edge of the building based on a respective probe trajectory building indicating a crossing of the first edge of the building. Embodiments may be configured to distinguish between entrances and exits of the building based on a direction of the probe trajectories crossing the first edge of the building.

Embodiments of the present disclosure may provide a computer program product including at least one non-transitory computer-readable storage medium having computer-executable program code instructions stored therein. The computer-executable program code instructions including program code instructions to: receive probe data points, each probe data point received from a probe apparatus of a plurality of probe apparatuses, each probe apparatus including one or more sensors and being associated with a user, where each probe data point includes location information and heading information as trajectory information associated with the respective probe apparatus; match probe data to a map; a location of each probe data point; determine probe data point candidates for a first edge of a building, where the probe data point candidates for the first edge of the building have a location within a buffer zone of the first edge of the building; determine, for the probe data point candidates, probe data points entering or exiting the building; generate, from the probe data points entering or exiting the building, a probe density histogram for the first edge of the building, where the probe density histogram represents a volume of probe data points at each of a plurality of positions across a width of the first edge of the building; apply a deconvolution method to the probe density histogram to obtain a multi-modal histogram; determine, from the multi-modal histogram, a number of statistically significant peaks, where each statistically significant peak represents an accessor to the building in the first edge of the building; and provide data for navigational assistance based on the computed accessors to the building.

According to some embodiments, the program code instructions to determine, from the multi-modal histogram, a number of statistically significant peaks may include program code instructions to determine, from the multi-modal histogram, a distance of each statistically significant peak from a reference point on the first edge of the building. The program code instructions to determine, from the multi-modal histogram, a number of statistically significant peaks, each statistically significant peak representing an accessor to the building in the first edge of the building may include program code instructions to: generate a perspective view of the first edge of the building; identify accessors in the first edge of the building in the perspective view; and provide for navigation assistance using the generated perspective view with identified accessors. The program code instructions to generate a probe density histogram for the first edge of the building representing a volume of probe data points at each of a plurality of positions across a width of the first edge may include program code instructions to: sub-divide a width of the first edge into a plurality of bins according to a chosen bin size; bin each probe data point of the probe data points entering and exiting the building to a respective one of the plurality of bins corresponding to a distance of the respective probe data point from a reference point on the first edge of the building; and generate the probe density histogram based on a volume of probe data points in each bin across a width of the first edge.

The deconvolution method of some embodiments may include a Maximum Entropy Method. The program code instructions to apply a deconvolution method to the probe density histogram to obtain a multi-modal histogram may include program code instructions to: model location error of the probe data points within the buffer zone of the first edge of the building using a point spread function; apply the deconvolution method to the probe density histogram using the point spread function; and generate the multi-modal histogram for the first edge of the building. The program code instructions to determine, for the probe data point candidates, probe data points entering or exiting the building may include program code instructions to: identify probe data points entering or exiting the building through the first edge of the building based on a respective probe trajectory indicating a crossing of the first edge of the building. Embodiments may include program code instructions to distinguish accessors to the building as entrances or exits based on a direction of the probe trajectories crossing the first edge of the building.

Embodiments of the present disclosure may provide a method for establishing accessors to a building from probe data. Methods may include: receiving probe data points, each probe data point received from a probe apparatus of a plurality of probe apparatuses, each probe apparatus including one or more sensors and being associated with a user, where each probe data point includes location information and heading information as trajectory information associated with a respective probe apparatus; determining a location for each of the probe data points; matching probe data to a map; determining probe data point candidates for a first edge of a building, where the probe data point candidates for the first edge of the building have a location within a buffer zone of the first edge of the building; determining, for the probe data point candidates, probe data points entering or exiting the building; generating, from the probe data points entering or exiting the building, a probe density histogram for the first edge of the building, where the probe density histogram represents a volume of probe data points at each of a plurality of positions across a width of the first edge of the building; applying a deconvolution method to the probe density histogram to obtain a multi-modal histogram; determining, from the multi-modal histogram, a number of statistically significant peaks, where each statistically significant peak represents an accessor to the building in the first edge of the building; and providing data for navigational assistance based on the computed accessors to the building.

According to some embodiments, determining from the multi-modal histogram a number of statistically significant peaks may include: determining, from the multi-modal histogram, a distance of each statistically significant peak from a reference point on the first edge of the building. Determining, from the multi-modal histogram, a number of statistically significant peaks, each statistically significant peak representing an accessor to the building in the first edge of the building may include: generating a perspective view of the first edge of the building; identifying accessors in the first edge of the building in the perspective view; and providing for navigation assistance using the generated perspective view with identified accessors. Generating a probe density histogram for the first edge of the building representing a volume of probe data points at each of a plurality of positions across a width of the first edge may include: sub-dividing a width of the first edge into a plurality of bins according to a chosen bin size; binning each probe data point of the probe data points entering and exiting the building to a respective one of the plurality of bins corresponding to a distance of the respective probe data point from a reference point on the first edge of the building; and generating the probe density histogram based on a volume of probe data points in each bin across the width of the first edge.

Embodiments of the present disclosure may provide an apparatus for establishing accessors to a building from probe data. The apparatus may include: means for receiving probe data points, each probe data point received from a probe apparatus of a plurality of probe apparatuses, each probe apparatus including one or more sensors and being associated with a user, where each probe data point includes location information and heading information as trajectory information associated with a respective probe apparatus; means for matching probe data to a map; means for determining a location for each of the probe data points; determining probe data point candidates for a first edge of a building, where the probe data point candidates for the first edge of the building have a location within a buffer zone of the first edge of the building; means for matching probe data to a map; means for determining, for the probe data point candidates, probe data points entering or exiting the building; means for generating, from the probe data points entering or exiting the building, a probe density histogram for the first edge of the building, where the probe density histogram represents a volume of probe data points at each of a plurality of positions across a width of the first edge of the building; means for applying a deconvolution method to the probe density histogram to obtain a multi-modal histogram; means for determining, from the multi-modal histogram, a number of statistically significant peaks, where each statistically significant peak represents an accessor to the building in the first edge of the building; and means for providing data for navigational assistance based on the computed accessors to the building.

According to some embodiments, the means for determining from the multi-modal histogram a number of statistically significant peaks may include: means for determining, from the multi-modal histogram, a distance of each statistically significant peak from a reference point on the first edge of the building. The means for determining, from the multi-modal histogram, a number of statistically significant peaks, each statistically significant peak representing an accessor to the building in the first edge of the building may include: means for generating a perspective view of the first edge of the building; means for identifying accessors in the first edge of the building in the perspective view; and means for providing for navigation assistance using the generated perspective view with identified accessors. The means for generating a probe density histogram for the first edge of the building representing a volume of probe data points at each of a plurality of positions across a width of the first edge may include: means for sub-dividing a width of the first edge into a plurality of bins according to a chosen bin size; means for binning each probe data point of the probe data points entering and exiting the building to a respective one of the plurality of bins corresponding to a distance of the respective probe data point from a reference point on the first edge of the building; and means for generating the probe density histogram based on a volume of probe data points in each bin across the width of the first edge.

BRIEF DESCRIPTION OF THE DRAWINGS

Having thus described certain example embodiments in general terms, reference will hereinafter be made to the accompanying drawings, which are not necessarily drawn to scale, and wherein:

Figure 1 is a block diagram showing an example architecture of an example embodiment described herein;
Figure 2 is a block diagram of an apparatus that may be specifically configured in accordance with an example embodiment;
Figure 3 is a block diagram of a probe apparatus that may be specifically configured in accordance with an example embodiment;
Figure 4 illustrates probe data on a map image from a plurality of probes traveling within a geographic region according to an example embodiment described herein;
Figure 5 illustrates filtered probe data on a map image that is established to be relevant to building accessors according to an example embodiment described herein;
Figure 6 illustrates a histogram of probe data projected onto a building face and assigned to bins of a predetermined width according to an example embodiment described herein;
Figure 7 depicts the histogram of Figure 6 deconvolved using the Maximum Entropy Method according to an example embodiment of the present disclosure; and
Figure 8 is a flowchart of another method for establishing building accessors from probe data points according to an example embodiment described herein.

DETAILED DESCRIPTION OF SOME EXAMPLE EMBODIMENTS

Some embodiments will now be described more fully hereinafter with reference to the accompanying drawings, in which some, but not all, embodiments of the invention are shown. Indeed, various embodiments of the invention may be embodied in many different forms and should not be construed as limited to the embodiments set forth herein.

Methods, apparatus and computer program products are provided in accordance with an example embodiment in order to discern building accessors from raw probe data. In some example embodiments, the identification of building accessors may be used to guide pedestrian traffic to and from building entrances and exits during pedestrian navigation assistance or route guidance. Pedestrian navigation and route guidance may be similar to that of vehicle navigation and route guidance. However, vehicle navigation and route guidance is generally performed along mapped road segments that enables vehicles to be map-matched to a road segment and guided along the road network with well defined paths including available road segments, entracnces/exits to restricted access highways, etc. Pedestrian navigation assistance and route guidance is more complex given the autonomy pedestrians have over their chosen paths and the less well defined pathways available for pedestrians. While pedestrian walkways may be established as sidewalks and paths, despite non-conventional pathways being available such as across roadways, parking lots, fields/parks, pathways into and out of buildings may not be well defined. Example embodiments described herein use probe data information to identify building accessors such as entrances, exits, doors, etc. to help facilitate pedestrian route guidance and navigation.

An instance of probe information/data comprises location information/data and heading information/data. For example, the probe information/data may comprise a geophysical location (e.g., latitude and longitude) indicating the location of the probe apparatus at the time that the probe information/data is generated and/or provided (e.g., transmitted). The probe information/data also includes a heading or direction of travel. In an example embodiment, an instance of probe information/data may comprise a probe identifier identifying the probe apparatus that generated and/or provided the probe information/data, a timestamp corresponding to when the probe information/data was generated, and/or the like. Based on the probe identifier and the timestamp a sequence of instances of probe information/data may be identified. For example, the instances of probe information of data corresponding to a sequence of instances of probe information/data may each comprise the same probe identifier. In an example embodiment, the instances of probe information/data in a sequence of instances of probe information/data are ordered based on the timestamps associated therewith.

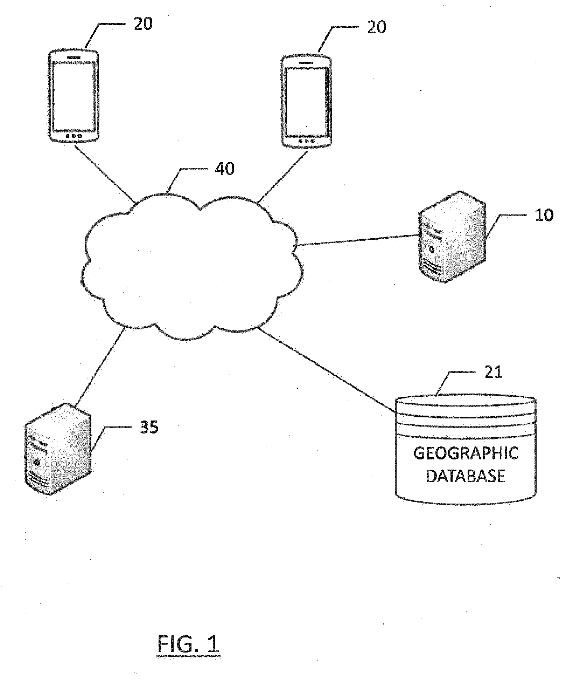

Figure 1 provides an illustration of an example system that can be used in conjunction with various embodiments of the present invention. As shown in Figure 1, the system may include a plurality of probe apparatuses 20, one or more apparatuses 10, one or more other computing entities 35, one or more networks 40, and/or the like. In various embodiments, the probe apparatus 20 may be a mobile computing device. For example, a probe apparatus 20 may be a smartphone, tablet, personal digital assistant (PDA), and/or other mobile computing device. In some embodiments, a probe apparatus 20 may be any portable apparatus associated with a pedestrian user, which may include smart phones, smart watches, fitness trackers, or the like. In an example embodiment, a probe apparatus 20 is any apparatus that provides (e.g., transmits) probe information/data to the apparatus 10.

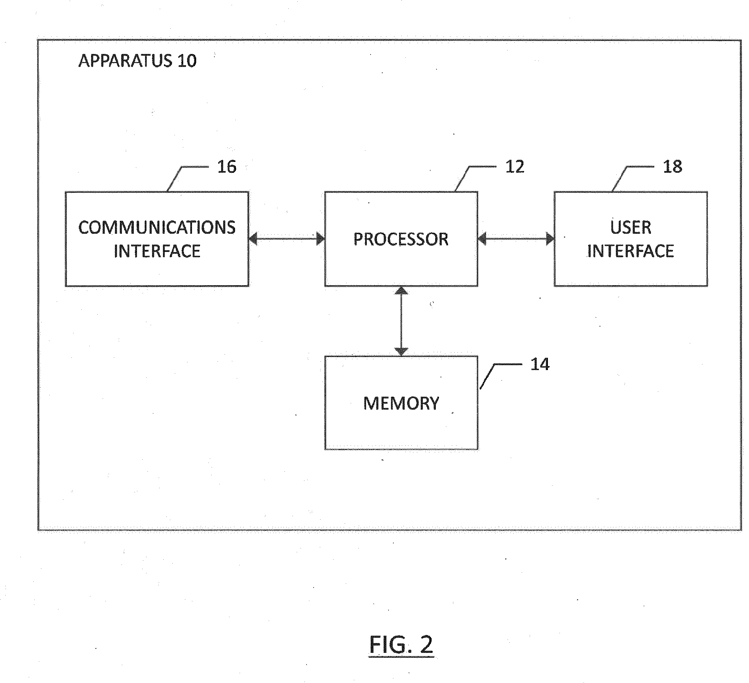

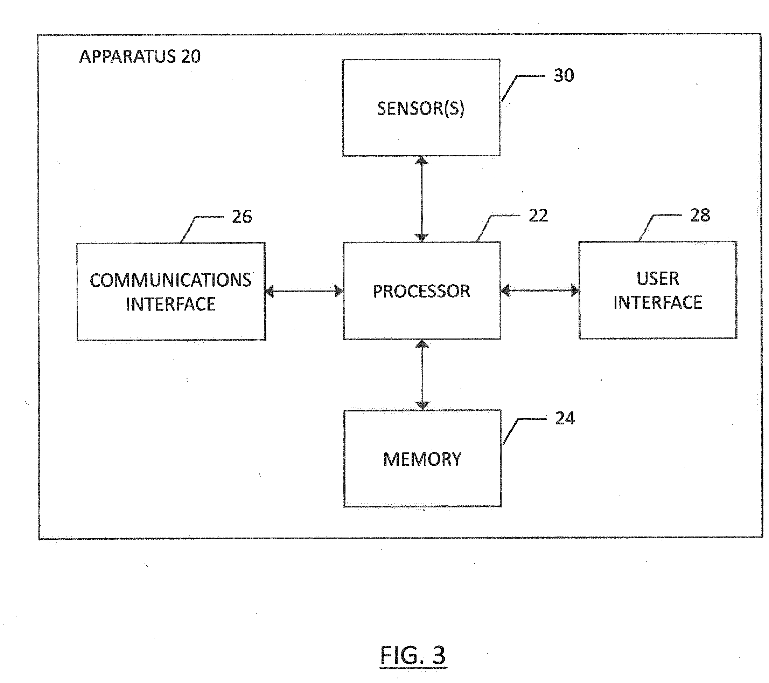

In an example embodiment, an apparatus 10 may comprise components similar to those shown in the example apparatus 10 illustrated in Figure 2. In an example embodiment, the apparatus 10 may be configured to provide map updates, route guidance, navigational assistance, and/or the like to the probe apparatus 20 and/or computing entity 35. In an example embodiment, a probe apparatus 20 may comprise components similar to those shown in the example probe apparatus 20 illustrated in Figure 3. In various embodiments, the apparatus 10 may be located remotely from the probe apparatus 20. Each of the components of the system may be in electronic communication with, for example, one another over the same or different wireless or wired networks 40 including, for example, a wired or wireless Personal Area Network (PAN), Local Area Network (LAN), Metropolitan Area Network (MAN), Wide Area Network (WAN), cellular network, and/or the like. In some embodiments, a network 40 may comprise the automotive cloud, digital transportation infrastructure (DTI), radio data system (RDS)/ high definition (HD) radio or other digital radio system, and/or the like. For example, a probe apparatus 20 may be in communication with an apparatus 10 via the network 40. For example, the probe apparatus 20 may communicate with the apparatus 10 via a network, such as the Cloud. For example, the Cloud may be a computer network that provides shared computer processing resources and data to computers and other devices connected thereto. For example, the probe apparatus 20 may be configured to receive one or more map tiles of a digital map from the apparatus 10, traffic information/data (embedded in a map tile of a digital map or separate therefrom), and/or provide probe information/data to the apparatus 10.

In an example embodiment, as shown in Figure 3, the probe apparatus 20 may comprise a processor 22, memory 24, a communications interface 26, a user interface 28, one or more sensors 30 (e.g., a location sensor such as a GPS sensor or GNSS sensor; IMU sensors; camera(s); two dimensional (2D) and/or three dimensional (3D) light detection and ranging (LiDAR)(s); long, medium, and/or short range radio detection and ranging (RADAR); ultrasonic sensors; electromagnetic sensors; (near-) infrared (IR) cameras; 3D cameras; 360° cameras; and/or other sensors that enable the probe apparatus 20 to determine one or more features of the corresponding apparatus' 20 surroundings), and/or other components configured to perform various operations, procedures, functions or the like described herein. In at least some example embodiments, the memory 24 is non-transitory.

Similarly, as shown in Figure 2, the apparatus 10 may comprise a processor 12, memory 14, a user interface 18, a communications interface 16, and/or other components configured to perform various operations, procedures, functions or the like described herein. In at least some example embodiments, the memory 14 is non-transitory. The computing entity 35 may comprise similar elements to the apparatus 10 and/or the probe apparatus 20. For example, the computing entity 35 may comprise a processor, memory, a user interface, a communications interface, and/or the like. In example embodiments, the computing entity 35 may comprise one or more sensors similar to sensor(s) 30. Certain example embodiments of the probe apparatus 20 and the apparatus 10 are described in more detail below with respect to Figures 2 and 3.

The probe apparatus 20, computing entity 35, and/or apparatus 10 of an example embodiment may be embodied by or associated with a variety of computing devices including, for example, a navigation system, a personal navigation device (PND) or a portable navigation device, a global navigation satellite system (GNSS), a cellular telephone, a mobile phone, a personal digital assistant (PDA), a watch, a camera, a computer, and/or other device that can perform navigation-related functions, such as digital routing and map display. Additionally or alternatively, the probe apparatus 20, computing entity 35, and/or apparatus 10 may be embodied in other types of computing devices, such as a server, a personal computer, a computer workstation, a laptop computer, a plurality of networked computing devices or the like, that are configured to update one or more map tiles, analyze probe points for route planning or other purposes. In this regard, Figure 2 depicts an apparatus 10 and Figure 3 depicts a probe apparatus 20 of an example embodiment that may be embodied by various computing devices including those identified above. As shown, the apparatus 10 of an example embodiment may include, may be associated with or may otherwise be in communication with a processor 12 and a memory device 14 and optionally a communication interface 16 and/or a user interface 18. Similarly, a probe apparatus 20 of an example embodiment may include, may be associated with, or may otherwise be in communication with a processor 22, and a memory device 24, and optionally a communication interface 26, a user interface 28, one or more sensors 30 (e.g., a location sensor such as a GNSS sensor, IMU sensors, and/or the like; camera(s); 2D and/or 3D LiDAR(s); long, medium, and/or short range RADAR; ultrasonic sensors; electromagnetic sensors; (near-)IR cameras, 3D cameras, 360° cameras; and/or other sensors that enable the probe apparatus to determine one or more features of the corresponding apparatus's 20 surroundings), and/or other components configured to perform various operations, procedures, functions, or the like described herein. In example embodiments, a computing entity 35 may, similar to the apparatus 10 and/or probe apparatus 20, comprise a processor, memory device, communication interface, user interface, and/or one or more additional components configured to perform various operations, procedures, functions, or the like described herein. In an example embodiment, a computing entity may comprise one or more sensors similar to the one or more sensors 30.

In some embodiments, the processor 12, 22 (and/or co-processors or any other processing circuitry assisting or otherwise associated with the processor) may be in communication with the memory device 14, 24 via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The processor 12, 22 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 12, 22 may be configured to execute instructions stored in the memory device 14, 24 or otherwise accessible to the processor. For example, the processor 22 may be configured to execute computer-executed instructions embedded within a road segment/link record of a map tile. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In some embodiments, the apparatus 10, computing entity 35, and/or probe apparatus 20 may include a user interface 18, 28 that may, in turn, be in communication with the processor 12, 22 to provide output to the user, such as a proposed route, and, in some embodiments, to receive an indication of a user input. As such, the user interface may include a display and, in some embodiments, may also include a keyboard, a mouse, a joystick, a touch screen, touch areas, soft keys, a microphone, a speaker, or other input/output mechanisms. Alternatively or additionally, the processor may comprise user interface circuitry configured to control at least some functions of one or more user interface elements such as a display and, in some embodiments, a speaker, ringer, microphone and/or the like. The processor and/or user interface circuitry comprising the processor may be configured to control one or more functions of one or more user interface elements through computer program instructions (e.g., software and/or firmware) stored on a memory accessible to the processor (e.g., memory device 14, 24, and/or the like).

The apparatus 10, computing entity 35, and/or the probe apparatus 20 may optionally include a communication interface 16, 26. The communication interface may be any means such as a device or circuitry embodied in either hardware or a combination of hardware and software that is configured to receive and/or transmit data from/to a network and/or any other device or module in communication with the apparatus. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

In addition to embodying the apparatus 10, computing entity 35, and/or probe apparatus 20 of an example embodiment, a navigation system may also include or have access to a geographic database 21 that includes a variety of data (e.g., map information/data) utilized in constructing a route or navigation path, determining the time to traverse the route or navigation path, matching a geolocation (e.g., a GNSS determined location) to a point on a map and/or a pedestrian path, and/or the like. For example, a geographic database 21 may include node data records (e.g., including anchor node data records comprising junction identifiers where paths intersect), pedestrian path segment or link data records, point of interest (POI) data records and other data records. More, fewer or different data records can be provided. In one embodiment, the other data records include cartographic ("carto") data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GNSS data associations (such as using known or future map matching or geo-coding techniques), for example. In an example embodiment, the data records (e.g., node data records, link data records, POI data records, and/or other data records) may comprise computer-executable instructions, a reference to a function repository that comprises computer-executable instructions, one or more coefficients and/or parameters to be used in accordance with an algorithm for performing the analysis, one or more response criteria for providing a response indicating a result of the analysis, and/or the like. In at least some example embodiments, the probe apparatus 20 and/or computing entity 35 may be configured to execute computer-executable instructions provided by and/or referred to by a data record. In an example embodiment, the apparatus 10 may be configured to modify, update, and/or the like one or more data records of the geographic database 21.

In an example embodiment, the pedestrian path data records are links or segments, e.g., maneuvers of a maneuver graph, representing paths that can be traversed by pedestrians, as can be used in the calculated route or recorded route information for determination of one or more personalized routes. The node data records are end points corresponding to the respective links or segments of the road segment data records. The link data records and the node data records represent a network of pathways, such as used by pedestrians, personal transportation devices (e.g., scooters, bicycles, Segway® vehicles, etc.), and/or other entities. While the geographic database 21 is described herein as containing pedestrian paths and associated information, the geographic database 21 of example embodiments may include road segment information and may be used to facilitate vehicular travel along road segments in addition to the pedestrian path navigation described herein.

The path segments and nodes can be associated with attributes, such as geographic coordinates, street names (e.g., along which sidewalks follow), address ranges, path restrictions (e.g., directional restrictions, motorized vehicle restrictions, etc.), and other navigation related attributes, as well as POIs, such as retail stores, hotels, restaurants, museums, stadiums, offices, buildings, parks, etc. The geographic database 21 can include data about the POIs and their respective locations in the POI data records. The geographic database 21 can also include data about places, such as cities, towns, or other communities, and other geographic features, such as bodies of water, mountain ranges, etc. Such place or feature data can be part of the POI data or can be associated with POIs or POI data records (such as a data point used for displaying or representing a position of a city). In addition, the geographic database 21 can include and/or be associated with event data (e.g., scheduled events such as sporting events, unscheduled events, etc.) associated with the POI data records or other records of the geographic database.

The geographic database 21 can be maintained by the content provider (e.g., a map developer or map services provider) in association with the services platform. By way of example, the map developer can collect geographic data to generate and enhance the geographic database 21. There can be different ways used by the map developer to collect data. These ways can include obtaining data from other sources, such as municipalities or respective geographic authorities. In addition, the map developer can employ field personnel to travel along paths throughout the geographic region to observe features and/or record information about them, for example. Also, remote sensing, such as aerial or satellite photography, can be used. In an example embodiment, the geographic database 21 may be updated based on information/data provided by one or more probe apparatuses.

The geographic database 21 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, distance and travel time functions, and other functions. The navigation-related functions can correspond to pedestrian navigation or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases. Regardless of the manner in which the databases are compiled and maintained, a navigation system that embodies an apparatus 10, computing entity 35, and/or probe apparatus 20 in accordance with an example embodiment may determine the time to traverse a route that includes one or more turns at respective intersections more accurately.

Embodiments described herein relate to determining building accessors from probe data to better establish pedestrian paths into and out of buildings and facilities. Embodiments determine locations on the perimeter of a building polygon that correspond to accessors such as doors, entrances, exits, etc. These locations may be identified by latitude and longitude.

Identifying the presence of building accessors on a building perimeter polygon using probe data from pedestrians entering and exiting the building is challenging. Due to the noisy nature of locationing techniques such as the global positioning system (GPS) and due to the inherent proximity of buildings to the locations of the accessors, accurately identifying the location of the building accessors is difficult and the reported locations of probe data points may be erroneous. Further, establishing when a pedestrian enters or exits a building must be distinguished from a pedestrian passing close to the building. These challenges render standard clustering techniques unsuitable to accurately establish the building accessors.

Building entrances can presently be determined through manual field collection of the building entrances from georeferenced LiDAR (light distancing and ranging), artificial intelligence, machine learning, or deep learning on georeferenced street-view imagery, or manual annotating of georeferenced street-view imagery. However, these techniques are manually intensive and may not be accurate. For example, doorways may exist to a building that are permanently sealed or accessible only during an emergency, such that these accessors may not be accessible to a pedestrian.

Embodiments described herein employ probe location data as a blurred distorted sampling of the true latitude and longitude location. This distortion can be modeled by a point-spread function (PSF). Knowing or estimating the GPS point-spread function, embodiments can employ deconvolution to recover the original door locations from a probe density histogram created from GPS trajectories entering the building façade through the doors projected onto the building edge.

Embodiments described herein use deconvolution techniques such as the *Maximum Entropy Method* to sharpen or pinpoint location data from a noisy location data, such as a noisy GPS signal location. Sensors and instruments used for establishing a location of a probe can experience atmospheric distortion, signal noise, or physical obstructions that cause the location data to be "blurred" or convoluted by a point spread function (PSF).

The *Maximum Entropy Method* of deconvolution is used in astronomy where instrument optics may cause blurring or warping of images of the sky through a point spread function. The point spread function affects the image in a manner known as *convolution* where the image of a point source, such as a distant star, is spread out to cover several pixels on the image sensor rather than a pin-point location of a single pixel at the actual location of the star in the image. *Deconvolution* is the inverse operation attempting to separate the undistorted truth from the point spread function and the digital image. A variety of deconvolution methods exist; however, embodiments described herein will focus primarily on the *Maximum Entropy Method* or *Maximum Entropy Image Restoration*.

The Maximum Entropy Method aims to obtain the most probable non-negative image consistent with the data, based on the number of ways in which such an image could have risen. In this manner, the Maximum Entropy Method models everything that is known and assumes nothing about what is unknown by choosing a model which is consistent with all of the facts, but otherwise is as uniform as possible. Entropy S is considered to be the amount of disorder, or lack of correlation in the data. Entropy and the related constraints are represented as:

$$S = - \sum_{i=0}^{N-1} p_i \log(p_i) \quad \text{with constraints:} \quad I_k = \sum_{i=0}^{N-1} p_i \, PSF_{k,i} \quad \text{and} \quad \sum_{i=0}^{N-1} p_i = 1 \quad (1)$$

Where $p_i$ is the proportion of the total image brightness for a pixel (without any point spread function blurring). Typically these constraints do not provide a unique result themselves such that the principle of maximum entropy: *Maximize (S)* is used to obtain the restored image.

Through application of the Maximum Entropy Method to probe data in order to estimate building assessors from the probe data, we take advantage that the GPS noise can be modeled as a point-spread function (PSF) describing how the GPS points spread out around a GPS device entering or exiting the building facade. Multiple pedestrians entering/exiting the entrance may cause the probe data to spread out and cover area outside and inside the physical door opening due to the high noise from consumer GPS devices. Embodiments may determine probe trajectories for a buffer zone outside and inside the building façade and project the probe points onto the building façade to create a two-dimensional histogram. The Maximum Entropy Method deconvolution may then be used to determine the building entrances which yields peaks in the deconvoluted histogram corresponding to the locations of the doors/entrances/exits.

Embodiments of the present disclosure may apply the Maximum Entropy Method to either a two-dimensional spatial image or a one-dimensional cross-section histogram of a façade of a building. Whether applying deconvolution methods to a probe data of a one-dimensional histogram or a two-dimensional spatial image, the overarching concept may be the same. The processing circuitry configured to generate a probe density histogram for a building façade representing a volume of probe data points at each of a plurality of positions or accessors across a width of the façade may include processing circuitry configured to: sub-divide a width of the building facade into a plurality of bins according to a chosen bin size; bin each probe data point to a respective one of the plurality of bins corresponding to a distance of the respective probe data point from a reference point of the facade; and generate the probe density histogram based on a volume of probe data points in each bin across a width of the building facade. The deconvolution method used may include a Maximum Entropy Method. The processing circuitry configured to apply a deconvolution method to the probe density histogram to obtain a multi-modal histogram may include processing circuitry configured to: model location error of the probe data points associated with the first building facade using a point spread function; apply the deconvolution method to the probe density histogram using the point spread function; and generate the multi-modal histogram for the building facade.

Ignoring sensor noise, the measured two-dimensional pixel/cell grid image or one-dimensional histogram may be represented as:

$$Measured\ Image = truth * PSF \qquad (2)$$

Where the (*) operator is the convolution operator. This equation expresses that the measured image is the convolution of truth with the point spread function (PSF). In dealing with a discrete image / histogram, equation (1) above can be expressed as the following for the one-dimensional histogram case:

$$I_k = \sum_{i=0}^{N-1} O_i PSF_{ki} \qquad (3)$$

Where $I_k$ is the number of probes in bin $k$ of the building facade histogram. $PSF_{ki}$ is the one-dimensional location noise model (e.g., a Gaussian model), but any Point spread Function model may be used. $O_i$ is the "truth" door location offset bin position the pedestrians used that we wish to reconstruct (i.e., $p_i$ in the entropy equation).

An objective of the embodiments described herein is to derive the "truth" accessor location $O_i$ for the one-dimensional implementation. Since the location data or GPS data for the probe data points are spread out around the device associated with the probe, any one one-dimensional histogram bin only contains a partial signal from the probe location and signals (i.e., probes) from all other pedestrians accessing the same building accessor and other accessors as well (due to noise). Accordingly, Entropy S is defined in the one-dimensional implementation as:

$$S = -\sum_{i=0}^{N-1} p_i \log(p_i) \quad \text{with constraints:} \quad I_k = \sum_{i=0}^{N-1} p_i\, PSF_{k,i} \quad \text{and} \quad \sum_{i=0}^{N-1} p_i = 1 \quad (4)$$

Where $p_i$ are the proportions of the total histogram image brightness tor the accessor offset bin we wish to identify (e.g., by removing the effect of any point spread function blurring). The two constraints express that the total energy $I$ of the system and the total number of particles (probes) are fixed.

To derive the solution - peak locations in the deconvolved histogram - we need to maximize the multi-variate function S subject to the constraints listed. This can be accomplished by introducing Lagrange multipliers and recasting the problem of determining the Lagrange multipliers as a variational problem by introducing *trial* Lagrange multipliers. Importantly, the introduction of a "potential function" F, which is concave for any trial set of Lagrange multipliers. The values of the multipliers are determined as the set which minimizes F.

$$F = \lambda_0 + \sum_k \lambda_k I_k \qquad (5)$$

In general, a function $f(x_0, x_1, x_2, ...)$ with constraints $g_1(x_0, x_1, x_2, ...) = 0$, $g_2(x_0, x_1, x_2, ...) = 0$, ..., is maximized by introducing a new function $\mathcal{L}((x_0, x_1, x_2, ... ), \lambda)$:

$$\mathcal{L}\big((x_0, x_1, x_2, \dots), \lambda\big)$$
$$= f(x_0, x_1, x_2, \dots) + \lambda_1 g_1(x_0, x_1, x_2, \dots) + \lambda_2 g_2(x_0, x_1, x_2, \dots) \quad (6)$$
$$+ \lambda_3 g_3(x_0, x_1, x_2, \dots) + \cdots$$

where the $\lambda$'s are the Lagrange multipliers. $f$ is maximized by setting the derivatives of $\mathcal{L}$ to zero:

$$\frac{\partial \mathcal{L}}{\partial x_i} = 0 \quad \text{and} \quad \frac{\partial \mathcal{L}}{\partial \lambda_i} = 0 \quad \text{for all i} \quad (7)$$

The process described herein may be applied to the one-dimensional implementation, as described further below.

According to an example implementation of the present disclosure, the GPS error point spread function (PSF) for the local geographic area is modeled. For example, using a Gaussian PSF with zero mean, $\sigma$ = 4 meters, and extent $\pm 3\sigma$. If the local PSF is unknown, it can be iteratively estimated using GPS sampling at doors at building facades for a geographical area and create an average PSF. Alternately, there exist variants of the Maximum Entropy Method that work with unknown point spread functions known as blind deconvolution.

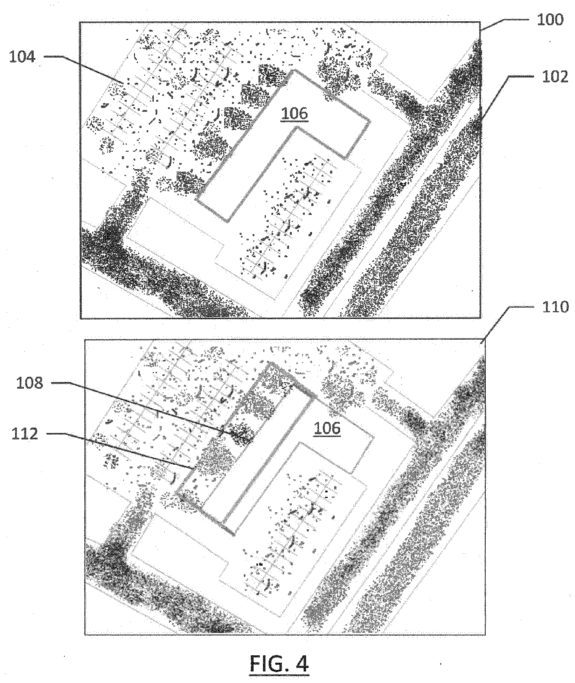

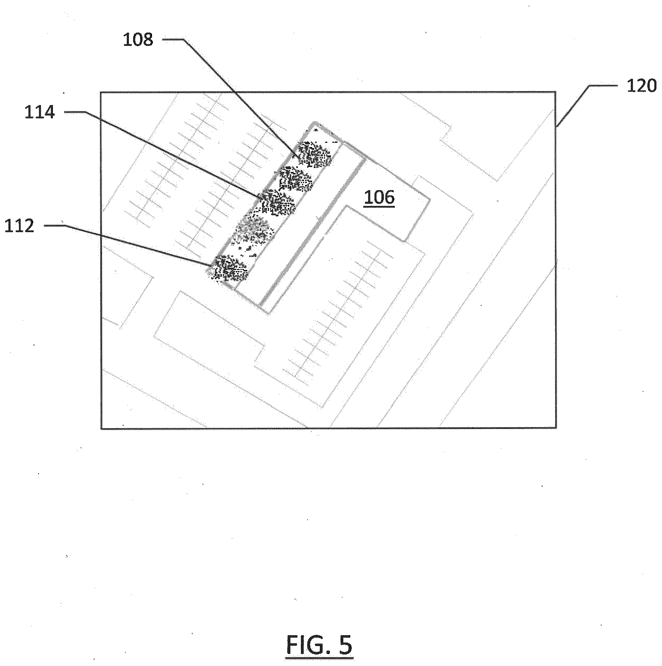

Probe candidates for each building polygon edge/face may be determined. As shown in Figure 4, probe data is matched to a map based on probe location information and illustrated in map image 100 as probe data points along roads 102 and in parking lots 104 of a building. The building may be represented as a polygon 106 having a plurality of edges or faces. For each edge of the building polygon edge/face, a buffer zone may be created outside of and inside of the edge. As shown in map image 110 of Figure 4, a buffer zone 112 is shown relative to polygon edge/face 108. For that buffer zone 112, the subset of probes inside the buffer zone are established, and from those probes entrances and exits are established in the building face. For the subset of probe data inside the buffer, trajectories of each probe data point within the buffer region are determined that cross the building face/edge 108 to distinguish between probe data points entering the building or exiting the building and those probe trajectories that do not enter or exit the building. Figure 5 illustrates the probe data points within the buffer zone 112.

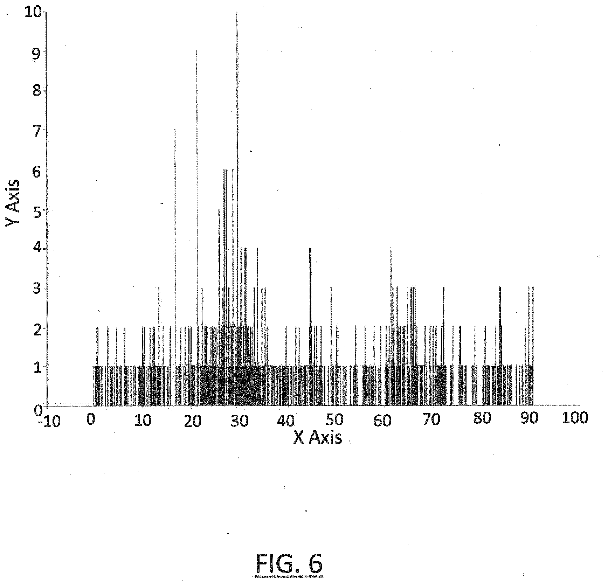

The subset of the probe data points 114 within the boundary 112 that are entering the building or exiting the building are projected onto the building face/edge to create a probe density histogram. Figure 6 illustrates an example embodiment of such a histogram with bins of 0.1 meters of width of the building face. It is noted that the probe data points of Figures 4 and 5 are merely representative and do not necessarily identically match the histogram of Figure 6, which is used as an example and includes considerably more data points than the illustrations of Figures 4 and 5. The "bins" reflect the granularity of the width to which the probe data points are assigned as projected onto the building face. The Y-axis represents a count of a number of probe data points for each bin, while the bins along the X-axis represent the distance along the building face from a reference point, such as the north building corner.

The histogram of Figure 6 is deconvolved using the Maximum Entropy Method to obtain the "truth" building accessor locations which are the peaks of the deconvolved histogram.

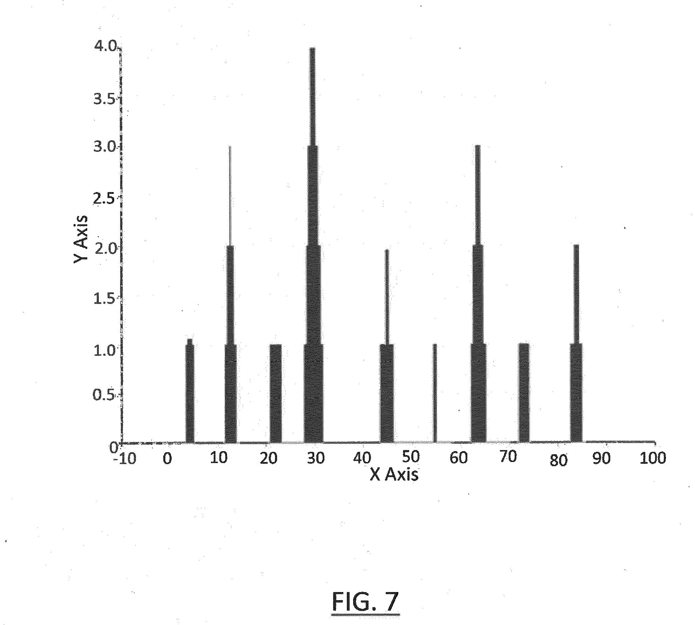

Figure 7 illustrates the deconvolved histogram of Figure 6 showing the peaks in the data. From the deconvolved histogram of Figure 7, the major peaks in this histogram are identified. It is visibly apparent than the Maximum Entropy Method produced nine peaks in the deconvolved histogram, with each peak corresponding to a door or accessor. The volume of each peak corresponds to a relative amount of probe traffic through each building accessor. The size of the peak also indicates the confidence in the presence and location of each accessor when the probe coverage is sparse. In such situations, small peaks may not reflect actual building accessors.

According to example embodiments provided herein, the Mean Shift may be used to identify the peaks, where the Mean Shift is a non-parametric feature space analysis technique for locating the maxima of a density function to identify the peaks. Mean shift may require multiple seeds (e.g., starting locations), such that the building façade edge frequency is seeded frequently, such as every one meter using a bandwidth of about two to three meters.

In an instance of sparse probe coverage, insignificant peaks may be prevalent and may need to be filtered out for not corresponding to actual accessor locations. This can be performed using robust statistics, such as based on median peak height.

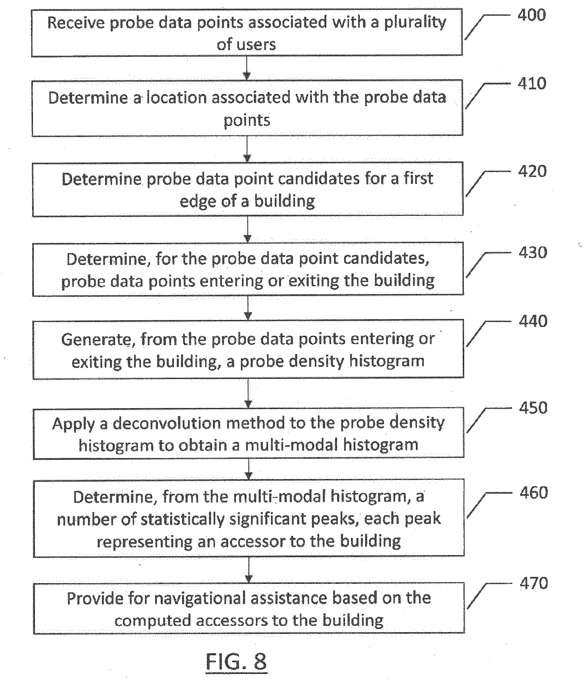

The building accessor locations including latitude and longitude may be computed from the deconvolved histogram. The distance $x_i$ to each significant peak center along the X-axis may correspond to the indivudal building accessor door location measured in meters from the reference point on the building face, such as the north building corner in the illustrated example embodiment. The building edge may be parameterized, from $P_0$ = (*latitude*$_0$, *longitude*$_0$) corresponding

to the north building edge as well as $x_0 = 0\ m$ in the histograms, to the lower building edge $P_1 = (latitude_1,\ longitude_1)$ which corresponds to $x_1 = 92\ m$ in the histograms, respectively. For each histogram peak location $x_i$ in the deconvolved histogram, the accessor location can be computed on the building edge and marked as shown in Figure 8 at 122 and marked in the corresponding locations from a street-view perspective $a_i = (latitude_i,\ longitude_i)$:

$$a_i = P_0 + t(P_1 - P_0), \text{ where } t = \frac{x_i}{x_1 - x_0} \qquad (7)$$

Once building accessors are established both in terms of location (latitude and longitude) and applied to street-view images of a respective edge of a building, navigational assistance can be provided using the building accessors to one or more computing entities 35. In an example embodiment, the building accessor information may facilitate guidance to a user as to where to park a vehicle for easiest access to a building, or provide pedestrian walking instructions for a user to access a building. The building accessor information/data may include a map revision such as an updated map tile for replacing a map tile in a digital map database or geographic database 21 or the like. The digital map database or geographic database 21 may be part of one or more computing entities 35 or may be separate therefrom as shown in Figure 1. According to some embodiments, the geographic database 21 may be maintained by a map data service provider and accessible via a network 40. A computing entity 35 may be a probe apparatus 20 (e.g., corresponding to a user device that is approaching the building, seeking navigational assistance to the building, looking for parking to access a building, and/or the like). For example, one or more route planning computations, determinations, and/or the like may be performed that take into account the building accessor information/data and provide accurate, granular navigational assistance to facilitate a user accessing the building.

Figure 8 illustrates a flowchart of a method for establishing building accessor information from probe data points according to an example embodiment of the present invention. As shown at 400, probe data points are received that are associated with a plurality of users. Each probe data point received from a probe apparatus may be from a probe apparatus having one or more sensors and being associated with a respective user. Each probe data point may include location information associated with the probe apparatus that is determined at 410. Probe data points that are candidates for identifying accessors to a building may be established at 420, and among those candidates, the probe data points representing probe apparatuses entering or exiting the building may be determined at 430. From the probe data points entering or exiting the building, a probe density histogram may be generated at 440, where the probe density histogram may represent a volume of probe data points at each of a plurality of positions across a width of the first edge of the building. The probe density histogram may be deconvoluted through application of a deconvolution method to obtain a multi-modal histogram at 450. From the multi-modal histogram, a number of statistically significant peaks may be determined at 460, each statistically significant peak representing an accessor to the building. Based on the identified accessors to the building, navigation assistance may be provided at 470.

As described above, Figure 8 illustrates a flowchart of apparatuses 10, methods, and computer program products according to an example embodiment of the disclosure. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory device 14, 24 of an apparatus employing an embodiment of the present invention and executed by the processor 12, 22 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In an example embodiment, an apparatus for performing the method of Figure 8 above may comprise a processor (e.g., the processor 12) configured to perform some or each of the operations (400-470) described above. The processor may, for example, be configured to perform the operations (400-470) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 400-470 may comprise, for example, the processor 12 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method for establishing accessors of a building from probe data comprising:

   receiving probe data points, each probe data point received from a probe apparatus of a plurality of probe apparatuses, each probe apparatus comprising one or more sensors and being associated with a user, wherein each probe data point comprises location information and heading information as trajectory information associated with the respective probe apparatus;
   matching probe data to a map;
   determining a location for each of the probe data points;
   determining probe data point candidates for a first edge of a building, wherein the probe data point candidates for the first edge of the building have a location within a buffer zone of the first edge of the building;
   determining, for the probe data point candidates, probe data points entering or exiting the building;
   generating, from the probe data points entering or exiting the building, a probe density histogram for the first edge of the building, wherein the probe density histogram represents a volume of probe data points at each of a plurality of positions across a width of the first edge of the building;
   applying a deconvolution method to the probe density histogram to obtain a multi-modal histogram;
   determining, from the multi-modal histogram, a number of statistically significant peaks, wherein each statistically significant peak represents an accessor to the building in the first edge of the building; and
   providing data for navigational assistance based on the computed accessors to the building.

2. The method of claim 1, wherein determining, from the multi-modal histogram, a number of statistically significant peaks comprises:
   determining, from the multi-modal histogram, a distance of each statistically significant peak from a reference point on the first edge of the building.

3. The method of any of claims 1 and 2, wherein determining, from the multi-modal histogram, a number of statistically significant peaks, each statistically significant peak representing an accessor to the building in the first edge of the building comprisesgenerating a perspective view of the first edge of the building;

   identifying accessors in the first edge of the building in the perspective view; and
   providing for navigation assistance using the generated perspective view with identified accessors.

4. The method of any of claims 1 to 3, wherein the generating a probe density histogram for the first edge of the builing representing a volume of probe data points at each of a plurality of positions across a width of the first edge comprises:

   sub-dividing a width of the first edge into a plurality of bins according to a chosen bin size;
   binning each probe data point of the probe data points entering and exiting the building to a respective one of the plurality of bins corresponding to a distance of the respective probe data point from a reference point on the first edge of the building; and
generating the probe density histogram based on a volume of probe data points in each bin across the width of the first edge.

**5.** The method of any of claims 1 to 4, wherein the deconvolution method comprises a Maximum Entropy Method.

**6.** The method of any of claims 1 to 5, wherein the applying a deconvolution method to the probe density histogram to obtain a multi-modal histogram comprises:

modelling location error of the probe data points within the buffer zone of the first edge of the building using a point spread function;
applying the deconvolution method to the probe density histogram using the point spread function; and
generating the multi-modal histogram for the first edge of the building.

**7.** The method of any of claims 1 to 6, wherein the determining, for the probe data point candidates, probe data points entering or exiting the building comprises:
identifying probe data points entering or exiting the building through the first edge of the building based on a respective probe trajectory indicating a crossing of the first edge of the building.

**8.** The method of of claim 7, wherein the method further comprises distinguishing accessors to the building as entrances or exits based on a direction of the probe trajectories crossing the first edge of the building.

**9.** A computer program code comprising program code instructions, wherein the computer program code, when executed by a processor, causes an apparatus to perform the method according to any of claims 1 to 8.

**10.** The computer program code of claim 9, wherein said computer program code is carried by a non-transitory computer-readable storage medium.

**11.** An apparatus or system comprising means configured for performing the method of any of claims 1 to 8.

**12.** The apparatus or system of claim 11, wherein the apparatus or system is a mapping system.

**13.** The apparatus or system of any of claims 11 and 12, wherein the means comprise:

a memory comprising map data; and
processing circuitry configured to perform the method of any of claims 1 to 8.

**Patentansprüche**

**1.** Verfahren zum Ermitteln von Zugängen zu einem Gebäude anhand von Testdaten, umfassend:

Empfangen von Testdatenpunkten, wobei jeder Testdatenpunkt von einer Testvorrichtung einer Vielzahl von Testvorrichtungen, wobei jede Testvorrichtung umfassend einen oder mehrere Sensoren und mit einem Benutzer assoziiert ist, wobei jeder Testdatenpunkt Orts- und Kursinformationen umfasst, als Trajektorieninformationen, die mit der jeweiligen Testvorrichtung assoziiert sind;
Abgleichen der Testdaten mit einer Karte;
Bestimmen eines Ortes für jeden der Testdatenpunkte;
Bestimmen von Testdatenpunktkandidaten für einen ersten Rand eines Gebäudes, wobei die Testdatenpunktkandidaten für den ersten Rand des Gebäudes eine Position innerhalb einer Pufferzone des ersten Randes des Gebäudes haben;
Bestimmen, für die Testdatenpunktkandidaten, Testdatenpunkte, die in das Gebäude Eintreten oder aus dem Gebäude Austreten;
Generieren, von den Testdatenpunkten, die in das Gebäude Eintreten oder aus dem Gebäude Austreten, ein Testdichte-Histogramm für den ersten Rand des Gebäudes, wobei das Testdichte-Histogramm ein Volumen von Testdatenpunkten an jeder einer Vielzahl von Positionen über eine Breite des ersten Rands des Gebäudes repräsentiert;
Anwenden einer Entfaltungsmethode auf das Testdichte-Histogramm, um ein multimodales Histogramm zu erhalten;
Bestimmen, von dem multimodalen Histogramm, einer Anzahl statistisch signifikanter Spitzen, wobei jede statistisch signifikante Spitze einen Zugang zu dem Gebäude in dem ersten Rand des Gebäudes repräsentiert; und
Bereitstellen von Daten zur Navigationsunterstützung basierend auf den berechneten Zugängen zu dem Gebäude.

2. Verfahren nach Anspruch 1, wobei das Bestimmen, von dem multimodalen Histogramm, einer Anzahl statistisch signifikanter Spitzen umfasst:

Bestimmen, von dem multimodalen Histogramm, eines Abstands jeder statistisch signifikanter Spitze von einem Referenzpunkt auf dem ersten Rand des Gebäudes.

3. Verfahren nach einem der Ansprüche 1 und 2, wobei das Bestimmen, von dem multimodalen Histogramm, einer Anzahl statistisch signifikanter Spitzen, jede statistisch signifikante Spitze repräsentierend einen Zugang zu dem Gebäude in dem ersten Rand des Gebäudes umfasst ein Generieren einer perspektivischen Ansicht des ersten Rands des Gebäudes;

Identifizieren von Zugängen am ersten Rand des Gebäudes in der perspektivischen Ansicht; und
Bereitstellen einer Navigationsunterstützung unter Verwendung der generierten perspektivischen Ansicht mit identifizierten Zugangspunkten.

4. Verfahren nach einem der Ansprüche 1 bis 3, wobei das Generieren eines Testdichte-Histogramms für den ersten Rand des Gebäudes repräsentierend ein Volumen von Testdatenpunkten an jeder einer Vielzahl von Positionen über eine Breite des ersten Rands umfasst:

Unterteilen der Breite des ersten Rands in eine Vielzahl von Bins entsprechend einer gewählten Bin-Größe;
Binnen jedes Testdatenpunkts der in das Gebäude eintretenden und aus dem Gebäude austretenden Testdatenpunkte, um einen jeweiligen der mehreren Bins, die einem Abstand des jeweiligen Testdatenpunkts von einem Referenzpunkt an dem ersten Rand des Gebäudes entspricht; und
Generieren des Testdichte-Histogramms basieren auf einem Volumen von Testdatenpunkten in jedem Bin über die Breite des ersten Rands.

5. Verfahren nach einem der Ansprüche 1 bis 4, wobei die Entfaltungsmethode eine Maximum-Entropie-Methode umfasst.

6. Verfahren nach einem der Ansprüche 1 bis 5, wobei das Anwenden einer Entfaltungsmethode auf das Testdichte-Histogramm, um ein multimodales Histogramm zu erhalten umfasst:

Modellieren eines des Ortsfehlers der Testdatenpunkte innerhalb der Pufferzone des ersten Rands des Gebäudes unter Verwendung einer Punktspreizungsfunktion;
Anwenden der Entfaltungsmethode auf das Testdichte-Histogramm unter Verwendung der Punktspreizfunktion; und
Generieren des multimodalen Histogramms für den ersten Rand des Gebäudes.

7. Verfahren nach einem der Ansprüche 1 bis 6, wobei das Bestimmen, für die Testdatenpunktkandidaten, der in das Gebäude eintretende oder das Gebäude
verlassende Testdatenpunkte umfasst:
Identifizieren von Testdatenpunkten, die in das Gebäude eintreten oder aus dem Gebäude austreten über den ersten Rand des Gebäudes basierend auf einer entsprechenden Testtrajektorie, die eine Überquerung des ersten Rands des Gebäudes indiziert.

8. Verfahren nach Anspruch 7, wobei das Verfahren ferner ein Unterscheiden von Zugängen zu dem Gebäude als Eingänge oder Ausgänge basierend auf einer Richtung der Testtrajektorien, die den ersten Rand des Gebäudes kreuzen umfasst.

9. Ein Computerprogrammcode umfassend Programmcodeinstruktionen, wobei der Computerprogrammcode, wenn er von einem Prozessor ausgeführt wird, eine Vorrichtung veranlasst, das Verfahren nach einem der Ansprüche 1 bis 8 durchzuführen.

10. Computerprogrammcode nach Anspruch 9, wobei der Computerprogrammcode auf einem nicht-transitorischen, computerlesbaren Speichermedium gespeichert ist.

11. Vorrichtung oder System umfassend Mittel, die zur Durchführung des Verfahrens nach einem der Ansprüche 1 bis 8 konfiguriert sind.

12. Vorrichtung oder System nach Anspruch 11, wobei die Vorrichtung oder das System ein Kartierungssystem ist.

13. Vorrichtung oder System nach einem der Ansprüche 11 und 12, wobei die Mittel umfassen:

> einen Speicher mit Kartendaten; und
> eine Verarbeitungsschaltung, die zur Durchführung des Verfahrens nach einem der Ansprüche 1 bis 8 konfiguriert ist.

**Revendications**

1. Procédé pour établir les accesseurs d'un bâtiment à partir de données de sonde comprenant:

> la réception de points de données de sonde, chaque point de données de sonde étant reçu à partir d'un appareil de sonde d'un bâtiment pluralité de appareils de sonde, chaque appareil de sonde comprenant un ou plusieurs capteurs et étant associé à un utilisateur, dans lequel chaque point de données de sonde comprend des informations de localisation et des informations decap en tant que des informations de trajectoire associées à l'appareil de sonde respectif;
> la mise en correspondance des données de sonde avec une carte;
> déterminer un emplacement pour chacun des points de données de sonde;
> déterminer des candidats de points de données de sonde pour un premier bord d'un
> bâtiment, dans lequel les candidats de points de données de sonde pour le premier bord du bâtiment ont un emplacement dans une zone tampon du premier bord du bâtiment;
> déterminer, pour les candidats points de données de sonde, les points de données de sonde entrant ou sortant du bâtiment;
> générer, à partir des points de données de sonde entrant ou sortant du bâtiment, une densité de sonde histogramme de densité de sonde pour le premier bord du bâtiment, dans lequel l'histogramme de densité de sonde représente un volume de points de données de sonde à chacune d'une pluralité de positions sur une largeur du premier bord du bâtiment;
> appliquer une méthode de déconvolution à l'histogramme de densité de sonde pour obtenir un histogramme multimodal;
> déterminer, à partir de l'histogramme multimodal, un nombre de pics statistiquement significatifs, dans lequel chaque pic statistiquement significatif représente un accesseur au bâtiment dans le premier bord du bâtiment; et
> fournir des données pour une assistance à la navigation basée sur les accesseurs calculés au bâtiment.

2. Procédé de la revendication 1, dans lequel la détermination, à partir de l'histogramme multimodal, d'un nombre de pics statistiquement significatifs comprend:
déterminer, à partir de l'histogramme multimodal, une distance de chaque pic statistiquement significatif par rapport à un point de référence sur le premier bord du bâtiment.

3. Procédé de l'une quelconque des revendications 1 et 2, dans lequel la détermination, à partir de l'histogramme multimodal, un nombre de pics statistiquement significatifs, dans lequel chaque pic statistiquement significatif représente un accesseur au bâtiment dans le premier bord du bâtiment comprend la génération d'une vue en perspective du premier bord du bâtiment;

> identification d'accesseurs dans le premier bord du bâtiment dans la vue en perspective ; et
> fourniture d'une aide à la navigation en utilisant la vue en perspective générée avec les accesseurs identifiés.

4. Procédé de l'une quelconque des revendications 1 à 3, dans lequel la génération d'un densité de sonde histogramme pour le premier bord du bâtiment représente un volume de points de données de sonde à chacune d'une pluralité de positions sur une largeur du premier bord du bâtiment comprend:

subdiviser une largeur du premier bord en une pluralité de bacs selon un bac choisi taille;
le regroupement de chaque point de données dé sonde des points de données de sonde entrant et sortant du bâtiment pour une case respective de la pluralité de cases correspondant à une distance du point de données de sonde respectif par rapport à un point de référence sur le premier bord du bâtiment ; et
générer l'histogramme de densité de sonde sur la base d'un volume de points de données de sonde dans chaque case sur la largeur du premier bord.

5. Procédé de l'une quelconque des revendications 1 à 4, dans lequel la méthode de déconvolution comprend une méthode d'entropie maximale.

6. Procédé de l'une quelconque des revendications 1 à 5, dans lequel l'application d'un méthode de déconvolution à l'histogramme de densité de sonde pour obtenir un histogramme multimodal comprend:

   modélisation de l'erreur de localisation des points de données de sonde dans la zone tampon du premier bord du bâtiment en utilisant une fonction d'étalement de point;
   appliquer le méthode de déconvolution à l'histogramme de densité de sonde en utilisant la fonction d'étalement de point ; et
   générer l'histogramme multimodal pour le premier bord du bâtiment.

7. Procédé de l'une quelconque des revendications 1 à 6, dans lequel la détermination, pour les candidats points de données de sonde, des points de données de sonde entrant ou sortant du bâtiment comprend:
   identifier des points de données de sonde entrant ou sortant du bâtiment par le premier bord du bâtiment sur la base d'une trajectoire de sonde respective indiquant un croisement du premier bord du bâtiment.

8. Procédé de la revendication 7, dans lequel le procédé comprend en outre la distinction entre les accesseurs au bâtiment comme des entrées ou des sorties sur la base d'une direction des trajectoires de sonde traversant le premier bord du bâtiment.

9. Un code de programme informatique comprenant des instructions de code de programme, dans lequel l'ordinateur code de programme, lorsqu'il est exécuté par un processeur, amène un appareil à exécuter le procédé selon l'une quelconque des revendications 1 à 8.

10. Code de programme informatique de la revendication 9, dans lequel ledit code de programme informatique est porté par un support de stockage lisible par ordinateur non transitoire.

11. Appareil ou système comprenant des moyens configurés pour exécuter le procédé de l'une quelconque des revendications 1 à 8.

12. Appareil ou système de la revendication 11, dans lequel l'appareil ou le système est un système de cartographie.

13. Appareil ou système de l'une quelconque des revendications 11 et 12, dans lequel les moyens comprennent : une mémoire comprenant des données de carte ; et un circuit de traitement configuré pour exécuter le procédé de l'une quelconque des revendications 1 à 8.

FIG. 1

EP 3 748 298 B1

APPARATUS 10

COMMUNICATIONS INTERFACE — 16

PROCESSOR — 12

USER INTERFACE — 18

MEMORY — 14

FIG. 2

APPARATUS 20

SENSOR(S) — 30

COMMUNICATIONS INTERFACE — 26

PROCESSOR — 22

USER INTERFACE — 28

MEMORY — 24

<u>FIG. 3</u>

EP 3 748 298 B1

EP 3 748 298 B1

FIG. 4

FIG. 5

FIG. 6

EP 3 748 298 B1

FIG. 7

```
┌─────────────────────────────────────────┐
│ Receive probe data points associated    │── 400
│ with a plurality of users                │
└─────────────────────────────────────────┘
                    │
                    ▼
┌─────────────────────────────────────────┐
│ Determine a location associated with the │── 410
│ probe data points                        │
└─────────────────────────────────────────┘
                    │
                    ▼
┌─────────────────────────────────────────┐
│ Determine probe data point candidates    │── 420
│ for a first edge of a building           │
└─────────────────────────────────────────┘
                    │
                    ▼
┌─────────────────────────────────────────┐
│ Determine, for the probe data point      │── 430
│ candidates, probe data points entering   │
│ or exiting the building                  │
└─────────────────────────────────────────┘
                    │
                    ▼
┌─────────────────────────────────────────┐
│ Generate, from the probe data points     │── 440
│ entering or exiting the building, a      │
│ probe density histogram                  │
└─────────────────────────────────────────┘
                    │
                    ▼
┌─────────────────────────────────────────┐
│ Apply a deconvolution method to the      │── 450
│ probe density histogram to obtain a      │
│ multi-modal histogram                    │
└─────────────────────────────────────────┘
                    │
                    ▼
┌─────────────────────────────────────────┐
│ Determine, from the multi-modal          │── 460
│ histogram, a number of statistically     │
│ significant peaks, each peak             │
│ representing an accessor to the building │
└─────────────────────────────────────────┘
                    │
                    ▼
┌─────────────────────────────────────────┐
│ Provide for navigational assistance      │── 470
│ based on the computed accessors to the   │
│ building                                 │
└─────────────────────────────────────────┘
```

<u>FIG. 8</u>

**EP 3 748 298 B1**

**Patent documents cited in the description**

- US 20180087922 A1
- EP 2775260 A1